(19) Europäisches Patentamt
European Patent Office
Office européen des brevets

(11) **EP 1 772 333 B1**

(12) **EUROPÄISCHE PATENTSCHRIFT**

(45) Veröffentlichungstag und Bekanntmachung des Hinweises auf die Patenterteilung:
**19.03.2008 Patentblatt 2008/12**

(51) Int Cl.:
**B60S 9/10** (2006.01)     **B66C 23/80** (2006.01)
**G01L 1/22** (2006.01)

(21) Anmeldenummer: **06025766.4**

(22) Anmeldetag: **14.10.2004**

(54) **Mobiles Arbeitsgerät mit Stützauslegern**

Moveable working device with supporting extension arms

Engin de travail mobile a stabilisateurs

(84) Benannte Vertragsstaaten:
**AT BE BG CH CY CZ DE DK EE ES FI FR GB GR HU IE IT LI LU MC NL PL PT RO SE SI SK TR**

(30) Priorität: **20.10.2003 DE 10349234**

(43) Veröffentlichungstag der Anmeldung:
**11.04.2007 Patentblatt 2007/15**

(62) Dokumentnummer(n) der früheren Anmeldung(en) nach Art. 76 EPÜ:
**04790386.9 / 1 675 760**

(73) Patentinhaber: **PUTZMEISTER Aktiengesellschaft**
**72631 Aichtal (DE)**

(72) Erfinder: **Gelies, Stephan**
**39124 Magdeburg (DE)**

(74) Vertreter: **Wolf, Eckhard et al**
**Patentanwälte Wolf & Lutz**
**Hauptmannsreute 93**
**70193 Stuttgart (DE)**

(56) Entgegenhaltungen:
WO-A-02/075076          GB-A- 2 187 432
NL-A- 9 401 892          US-A- 3 713 129

• PATENT ABSTRACTS OF JAPAN Bd. 2000, Nr. 07, 29. September 2000 (2000-09-29) -& JP 2000 095074 A (AICHI CORP), 4. April 2000 (2000-04-04)

## Beschreibung

Die Erfindung betrifft ein mobiles Arbeitsgerät, insbesondere eine Autobetonpumpe, mit einem Fahrgestell, mit zwei vorderen und zwei rückwärtigen, von einer Fahrstellung in mindestens eine Abstützstellung ausfahrbaren und mit je einem teleskopierbaren Stützbein auf einer Unterlage abstützbaren Stützauslegern, mit je einem Messglied zur Bestimmung der Stützkraft in den Stützbeinen, und mit einer Einrichtung zur Überwachung der Standsicherheit, die eine Auswerteelektronik umfasst, die in vorgegebenen Abtastzyklen mit stützbeinbezogenen Stützlastmesswerten beaufschlagbar ist.

Mobile Arbeitsgeräte dieser Art sind mit ausfahrbaren Stützauslegern versehen, die am Einsatzort die Standfestigkeit des Arbeitsgeräts verbessern sollen. Die Stützausleger haben dabei einerseits die Aufgabe, die Fahrzeugfederung zu eliminieren und die Räder zu entlasten. Zum anderen sollen die Stützausleger die Kippgefahr mindern, die sich ergibt, wenn über einen Arbeitsausleger hohe Kippmomente entstehen. Die Stützbeine der Stützausleger bilden die Ecken eines Vierecks, dessen Seitenlinien eine Fläche umschreiben, innerhalb welcher der Gesamtschwerpunkt des Arbeitsgeräts liegen muss, um die Standsicherheit zu gewährleisten. Da der auskragende Arbeitsausleger drehbar ist, beschreibt der Gesamtschwerpunkt bei einer Drehung einen Vollkreis, der im Arbeitsbereich des Arbeitsauslegers innerhalb der Viereckfläche liegen muss. Da die Platzverhältnisse auf den Baustellen beengt sind, wird oft auf eine Vollabstützung verzichtet. Dadurch wird der Schwenkbereich des Arbeitsauslegers begrenzt.

Um die Kippsicherung zu gewährleisten, wurde bereits eine Überwachungseinrichtung vorgeschlagen (Zeitschrift "Beton" 6/96, Seiten 362, 364). Dort werden die in den vier hydraulisch betätigten Teleskopen der Stützbeine herrschenden Drücke überwacht. Lässt der Druck in zwei Stützbeinzylindern nach, werden die Mastbewegungen und die Betonpumpe abgeschaltet. Diese Technik lässt sich auch für den Fall nutzen, dass eine Maschine aus Platzgründen nicht voll abgestützt ist. Untersuchungen haben gezeigt, dass Druckmessungen in den Teleskopzylindern der Stützbeine für eine zuverlässige Stützbeinüberwachung nicht ausreichen. Dies gilt vor allem dann, wenn einer der Teleskopzylinder auf Anschlag gefahren ist. Auch dynamische Abstützeffekte lassen sich mit diesem Überwachungssystem nicht erfassen.

Um diese Nachteile zu vermeiden, wurde schon vorgeschlagen (DE-A 101 10 176), dass im Fußteil eines jeden Stützbeins ein Kraftsensorpaar angeordnet ist. Dazu ist ein eigens hierfür konstruierter Stützfuß erforderlich, der in seiner Konstruktion recht aufwendig ist. Weiter ist dort jeder Kraftsensor in einem elektrischen Messkreis zur Abgabe eines stützlastabhängigen Messsignals angeordnet, wobei die Überwachungseinrichtung eine Auswerteelektronik umfasst, die in vorgegebenen Abtastzyklen mit den stützfußbezogenen Stützlast-Messwerten und zu deren Vergleich mit mindestens einem vorgegebenen stabilitätsbestimmenden Schwellenwert beaufschlagbar ist. Die Auswerteelektronik umfasst eine Softwareroutine zur Ermittlung des zweitniedrigsten stützfußbezogenen Stützlast-Messwerts eines jeden Abtastzyklus und zu dessen Vergleich mit einem stabilitätsbestimmenden Schwellenwert. Als nachteilig wird dabei angesehen, dass der Schwellenwert eine konstruktionsabhängige, dimensionsbelastete Größe ist und dass für die Bestimmung der stabilitätsrelevanten Lastwerte eine hohe Messgenauigkeit auch bei niedrigen Lasten erforderlich ist.

Weiter ist es bei einem Arbeitsgerät der eingangs angegebenen Art bekannt (GB-A-2187432), eine Einrichtung zur Überwachung der Standsicherheit vorzusehen, die eine Auswerteelektronik umfasst, die in vorgegebenen Abtastzyklen mit stützbeinbezogenen Stützlastmesswerten beaufschlagbar ist und die eine Alarmroutine zur Auslösung eines Alarmzustands bei Unterschreiten eines vorgegebenen Schwellenwerts für die Standsicherheit aufweist.

Ausgehend hiervon liegt der Erfindung die Aufgabe zugrunde, das bekannte Arbeitsgerät derart weiterzubilden, dass eine Echtzeit-Überwachung der Stützlast im Bereich der einzelnen Stützbeine in einem engen Zeitraster möglich ist, so dass auch dynamische Effekte und Trägheitseffekte beim Betrieb des Arbeitsgeräts in die Überwachung einbezogen werden können.

Die erfindungsgemäße Lösung besteht vor allem darin, dass die Auswerteelektronik eine Softwareroutine zur Bestimmung einer Standsicherheitszahl aus dem Quotienten aus der Gesamtsumme der Stützlastmesswerte aller Stützbeine und einer Teilsumme der Stützlastmesswerte der beiden augenblicklich höchstbelasteten Stützbeine, sowie eine Alarmroutine zur Auslösung eines Alarmzustands bei Unterschreiten eines vorgegebenen Schwellenwerts für die Standsicherheitszahl aufweist.

Um ein Umkippen des Arbeitsgeräts im Betrieb zu verhindern, sind mehrere abgestufte alarmauslösende Schwellenwerte für die Standsicherheitskontrolle vorgesehen. Bei Unterschreiten eines ersten Schwellenwerts wird der Maschinist über ein akustisches und/oder optisches Signal gewarnt, bei Unterschreiten eines zweiten, gegenüber dem ersten niedrigeren Schwellenwert ist eine lösbare Blockierung der lastverschiebenden Arbeitsbewegung auslösbar. Schließlich wird bei Unterschreiten eines dritten, gegenüber dem zweiten niedrigeren Schwellenwerts eine unlösbare Blockierung der lastverschiebenden Arbeitsbewegung ausgelöst.

Eine bevorzugte Ausgestaltung der Erfindung sieht vor, dass bei Stützauslegern, bei denen die teleskopierbaren Stützbeine mit einem auslegerfesten Teleskopglied mittels eines Anlenkbolzens an einem Stützbeinkasten angelenkt sind, der Anlenkbolzen als Messglied zur Bestimmung der Stützlast ausgebildet werden kann.

Zweckmäßig ist hierzu gemäß einer ersten Ausführungsvariante eine Einrichtung zur Bestimmung der beim Abstützvorgang auftretenden elastischen Biegung des Anlenkbolzens als Maß für die stützbeinbezogene Stützlast vorgesehen ist. In diesem Fall trägt der Anlenkbolzen mindestens einen Dehnmessstreifen zur Bestimmung der Bolzenbiegung. Eine bevorzugte Ausgestaltung der Erfindung sieht vor, dass der Anlenkbolzen mindestens eine achsparallel verlaufende Längsnut zur Aufnahme des mindestens einen Dehnmessstreifens aufweist. Vorteilhafterweise enthält der Anlenkbolzen zwei bezüglich einer Biegeebene einander gegenüberliegende, nach entgegengesetzten Seiten offene Längsnuten zur Aufnahme von jeweils zwei Dehnmessstreifen, wobei die Anschlüsse der Dehnmessstreifen in einer vorzugsweise als Brückenschaltung ausgebildeten Messschaltung miteinander verbunden sind. Weiter enthält der Anlenkbolzen zweckmäßig eine einseitig offene Zentralbohrung sowie eine von der mindestens einen Längsnut zur Zentralbohrung verlaufende Querbohrung zur Aufnahme eines Messkabels.

Gemäß einer weiteren Ausführungsvariante der Erfindung ist eine Einrichtung zur Bestimmung der beim Abstützvorgang im Bereich der Lagerstellen des Anlenkbolzens auftretenden elastischen Scherverformung als Maß für die stützbeinbezogene Stützlast vorgesehen. In diesem Fall trägt der Anlenkbolzen im Bereich seiner Lagerstellen mindestens einen Dehnmessstreifen zur Bestimmung der Scherverformung. Vorteilhafterweise weist der Anlenkbolzen zu diesem Zweck im Bereich der Lagerstellen mindestens einen in Abstützrichtung quer zur Bolzenachse durchgehenden Durchbruch auf, in welchem eine mit dem Bolzenmaterial einstückig verbundene Membran zur Aufnahme mindestens eines Dehnmessstreifens angeordnet ist. Bevorzugt weist der Anlenkbolzen an beiden Lagerstellen je einen Durchbruch mit Membran auf, wobei die Membran in der Scherebene zwischen einem Innen- und Außenlager des Stützbeins angeordnet ist. Das Außenlager bildet eine Abstützung für den Bolzen im Stützbeinkasten, während am Innenlager das feststehende Teleskopteil abgestützt ist. Auf den einander abgewandten Breitseitenflächen der Membran ist zweckmäßig jeweils ein parallel zur Scherebene verlaufender Dehnmessstreifen angeordnet, wobei die Dehnmessstreifen in einer vorzugsweise als Brückenschaltung ausgebildeten Messschaltung miteinander verbunden sind.

In beiden Ausführungsvarianten ist die Messschaltung ausgangsseitig über einen Signalverstärker an die computergestützte Auswerteelektronik angeschlossen.

Im Folgenden wird die Erfindung anhand eines in der Zeichnung in schematischer Weise dargestellten Ausführungsbeispiels näher erläutert. Es zeigen

Fig. 1     eine Ansicht einer am Straßenrand abgestellten Autobetonpumpe mit auf der Straßenseite schmal abgestützten Stützauslegern;

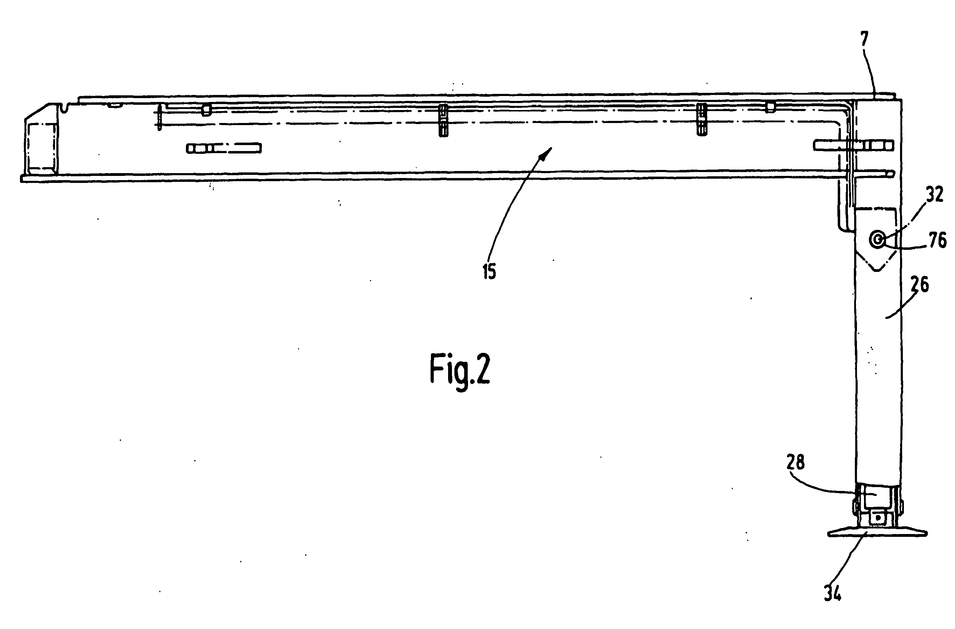

Fig. 2     eine Seitenansicht eines Stützauslegers;

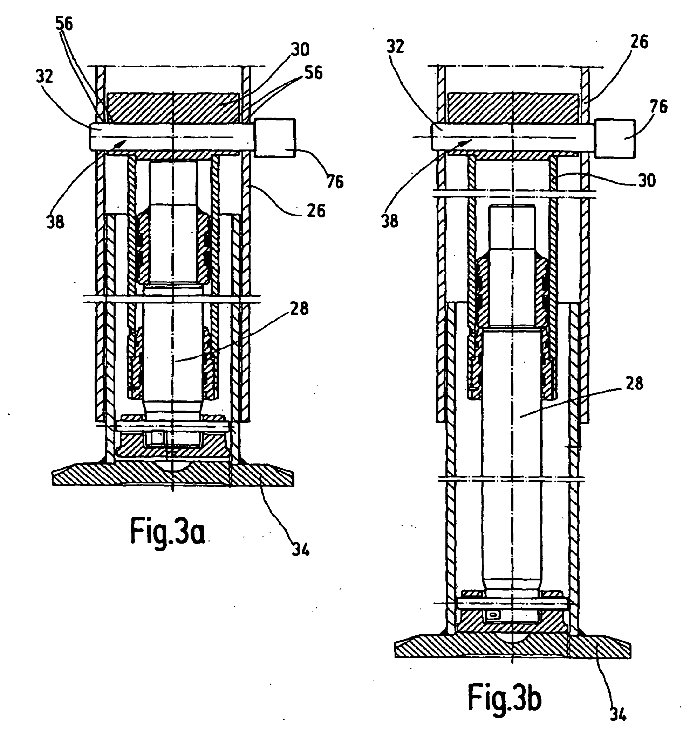

Fig. 3a    und b ein Stützbein mit als Messglied ausgebildetem Messbolzen im eingefahrenen und ausgefahrenen Zustand;

Fig. 4a    und b eine Draufsicht und eine Schnittdarstellung eines Anlenkbolzens als Biegebalken;

Fig. 5a    und b eine Draufsicht und eine Schnittdarstellung einer zweiten Variante eines Anlenkbolzens als Biegebalken;

Fig. 6a    und b einen Längsschnitt und einen Querschnitt eines Anlenkbolzens als Scherbolzen;

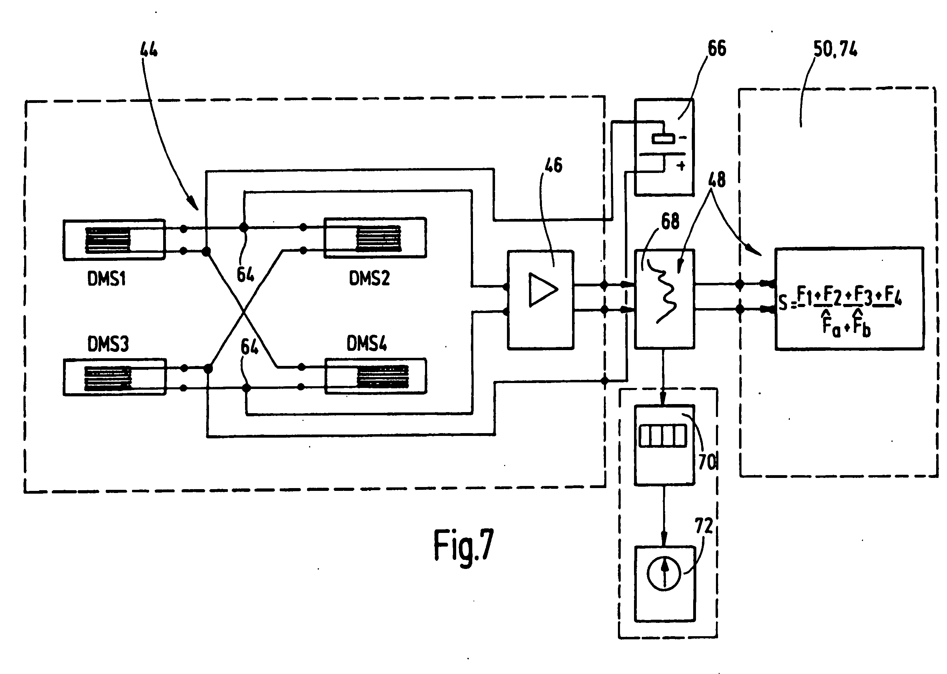

Fig. 7     eine Schaltungsanordnung in schematischer Darstellung für jeweils vier Dehnmessstreifen in einer Brückenschaltung mit computergestützter Auswerteelektronik.

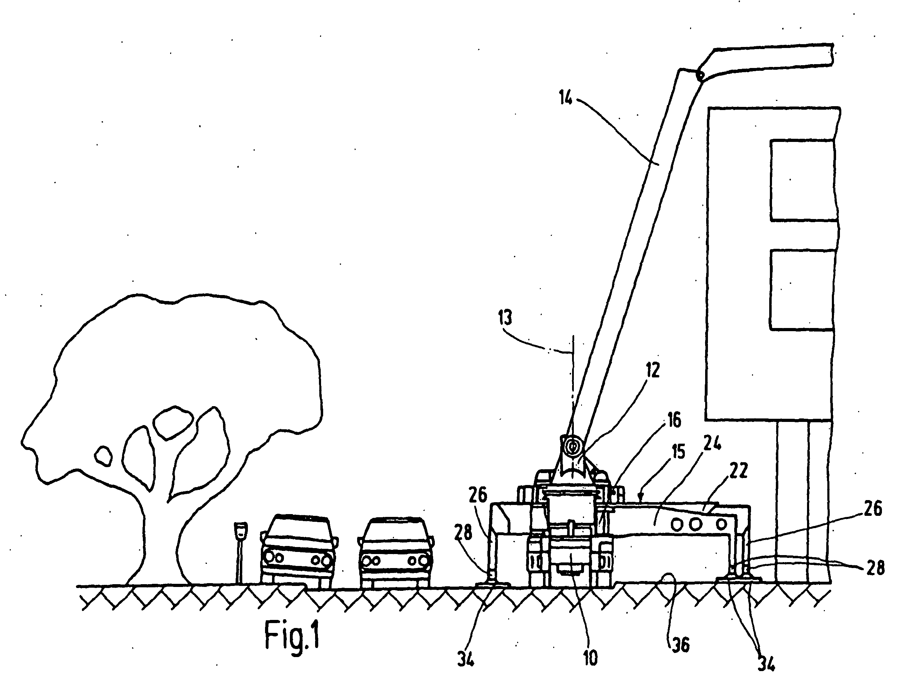

Die in Fig. 1 dargestellte fahrbare Betonpumpe besteht im wesentlichen aus einem mehrachsigen Fahrgestell 10, einem an einem vorderachsnahen Mastbock 12 um eine fahrgestellfeste Hochachse 13 drehbar gelagerten, als Betonverteilermast ausgebildeten Arbeitsausleger 14 und einer Stützkonstruktion 15, die einen vorderen und einen rückwärtigen Stützausleger 22, 24 aufweist. Die Stützausleger 22, 24 weisen einen nach unten gerichteten Stützbeinkasten 26 auf, in welchen jeweils ein teleskopierbares Stützbein 28 mit seinem auslegerfesten Teleskopglied 30 befestigt ist. Die Stützbeine 28 sind mit einer Fußplatte 34 auf dem Untergrund 36 abstützbar. Die vorderen und rückwärtigen Stützausleger 22, 24 sind mit hydraulischen Mitteln von einer fahrgestellnahen Fahrstellung in eine Abstützstellung ausfahrbar. Bei dem in Fig. 1 gezeigten Beispiel wurde auf der Straßenseite eine Schmalabstützung gewählt. Die Schmalabstützung, mit der den Platzproblemen auf Baustellen Rechnung getragen werden kann, führt zwangsläufig zu einer Einschränkung im Drehwinkel des Verteilermasts 14.

Die vier auf dem Boden aufstehenden Stützbeine 28 spannen ein Viereck auf, dessen Seiten jeweils eine Kippkante bilden. Zur Gewährleistung der Standsicherheit dürfen die Viereckseiten beim Verfahren des Verteilermasts 14 vom Gesamtschwerpunkt des Systems nicht nach außen überschritten werden. Die Erfindung macht von der Erkenntnis Gebrauch, dass die Lage des Gesamtschwerpunkts innerhalb des Kippvierecks durch Messglieder 38 innerhalb der Stützbeine 28 überwacht werden kann. Dementsprechend ist in jedem Stützbein 28 ein Messglied 38 angeordnet, das bei den gezeigten Ausführungsbeispielen jeweils vier Dehnmessstreifen DMS1 bis DMS4 mit zugehörigem elektrischem Messkreis 44 und Operationsverstärker 46 umfasst. Jeder Messkreis 44 gibt über seinen Verstärker 46 ein in vorgegebenen Zeitzyklen abtastbares, stützlastabhängiges Messsignal ab, dass in einer Auswerteelektronik 48 mit angeschlossenem Bordrechner 50 verarbeitet wird.

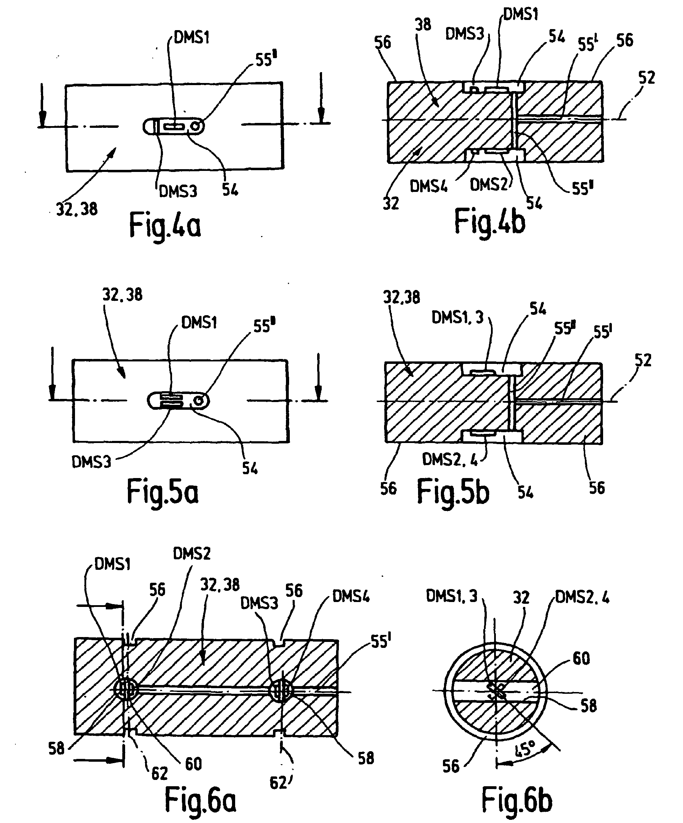

Eine Besonderheit der Erfindung besteht darin, dass die Messglieder zur Bestimmung der stützbeinbezogenen Stützlasten durch die Anlenkbolzen 32 gebildet sind. Im Falle der in den Figuren 4 und 5 gezeigten Ausführungsbeispiele enthält das Messglied 38 eine Einrichtung zur Bestimmung der beim Abstützvorgang auftretenden elastischen Biegung des Anlenkbolzens als Maß für die stützbeinbezogene Stützlast. Zu diesem Zweck weist der Anlenkbolzen 32 zwei bezüglich einer Biegeebene 52 einander gegenüberliegende, nach entgegengesetzten Seiten offene Längsnuten 54 zur Aufnahme von jeweils zwei Dehnmessstreifen DMS1, DMS3 bzw. DMS2, DMS4 auf, wobei beim Ausführungsbeispiel nach Fig. 5 die Dehnmessstreifen in den Längsnuten 54 parallel nebeneinander in Längsrichtung des Anlenkbolzens 32 angeordnet sind, während im Ausführungsbeispiel nach Fig. 4 in den Längsnuten jeweils ein parallel und ein quer zur Längsrichtung des Anlenkbolzens 32 ausgerichteter Dehnmessstreifen angeordnet ist.

Bei dem in Fig. 6 gezeigten Ausführungsbeispiel umfassen die Messglieder 38 eine Einrichtung zur Bestimmung der beim Abstützvorgang im Bereich der Lagerstellen 56 der Anlenkbolzen 32 auftretenden elastischen Scherverfonnung als Maß für die stützbeinbezogene Stützlast. Zu diesem Zweck weisen die Anlenkbolzen 38 im Bereich der Lagerstellen 56 jeweils einen Durchbruch 58 auf, in dem eine mit dem Bolzenmaterial einstückig verbundene Membran 60 angeordnet ist. Die Membran ist dabei in Richtung der Stützlast in der Scherebene 62 zwischen Innen- und Außenlager des Stützbeins 28 angeordnet. Auf den beiden abgewandten Breitseitenflächen der Membran ist jeweils ein parallel zur Scherebene 62 schräg zur Abstützrichtung verlaufender Dehnmessstreifen DMS1, DMS2 bzw. DMS3, DMS4 angeordnet, die sich paarweise unter einem Winkel vom 90° kreuzen.

Die Dehnmessstreifen DMS1 bis DMS4 der Ausführungsvarianten sind in einer als Brückenschaltung ausgebildeten Messschaltung 44 miteinander verbunden, deren Diagonalabgriffe 64 an die Eingänge des Operationsverstärkers 46 angeschlossen sind. Die Stromversorgung der Messschaltung 44 erfolgt über eine Hilfsstromquelle 66. Die Ausgangssignale der Messschaltung 44 werden über eine Signalverarbeitungsschaltung 68 einer digitalen oder analogen Anzeige 70, 72 zugeleitet. Außerdem werden die Ausgangssignale einem Bordcomputer 74 zur weiteren Auswertung, insbesondere zu einer Standsicherheitsüberwachung, zugeführt. Die Messelektronik 44 mit der Signalverarbeitungsschaltung 68 befindet sich jeweils in einem Gehäuse 76, das am einen Ende des jeweiligen Anlenkbolzens 32 nach außen über den Stützbeinkasten 26 übersteht. Der Anlenkbolzen 32 enthält zu diesem Zweck eine einseitig offene Zentralbohrung 55' sowie eine von der mindestens einen Längsnut 54 zur Zentralbohrung verlaufende Querbohrung 55" zur Aufnahme eines in das Gehäuse 76 geführten Messkabels.

Bei der Standsicherheitsüberwachung spielen die folgenden Überlegungen eine wichtige Rolle: Die Standsicherheit einer Autobetonpumpe ergibt sich aus den Gleichgewichtsbedingungen eines räumlichen Kraftsystems. Kräfte unterschiedlicher Wirkungsrichtung sind dabei z. B. zeitlich und örtlich veränderliche Eigen- und Betriebslasten, Massekräfte aus Beschleunigungs- und Abbremsvorgängen oder in Kraft und Größe zufällig angreifende Windlasten. Die Wirkung dieser Einflussgrößen steht im Gleichgewicht mit der momentanen Größe der Stützbeinkräfte.

Wie vorstehend ausgeführt, kann die Stützbeinkraft über das Messprinzip eines Biegebalkens oder über eine Scherkraftmessung bestimmt werden. Die Information über die momentane Größe aller vier Stützbeinkräfte wird mit einer gleichmäßigen Abtastrate an den Bordrechner 74 zum Beispiel über Kabel oder telemetrisch übertragen. Im Bordrechner 74 werden die einlaufenden Kraftwerte parallel verrechnet. Dazu wird zunächst die Summe aller Stützbeinkräfte $F_i$ (i = 1 bis 4) bestimmt. Zur Ermittlung einer Standsicherheitszahl S wird dieser Summenwert durch die Summe der beiden momentan größten Stützbeinkräfte $\hat{F}_a$ und $\hat{F}_b$ geteilt:

$$ S = \frac{F_1 + F_2 + F_3 + F_4}{\hat{F}_a + \hat{F}_b} $$

Erreicht die Summe der beiden höchsten Stützbeinkräfte die Summe aller Stützbeinkräfte, kommt die Maschine aus dem stabilen Gleichgewicht, z. B. einer Dreipunktabstützung, in ein instabiles Gleichgewicht und ist nicht mehr standsicher. Das Kräftegleichgewicht entspricht einem Momentengleichgewicht um eine der vorstehend beschriebenen Kippkanten. Durch Festlegung einer maschinenunabhängigen Standsicherheitszahl, z. B.

$$ S \geq 1{,}1{,} $$

kann unabhängig vom Maschinentyp, von der Stützbeinstellung, der Windlast und anderen variablen Parametem eine gleichbleibende Grenzstandsicherheit erreicht werden.

Eine wichtige Randbedingung für eine sichere Abstützung ist ein Aufstellen des Arbeitsgeräts mit vom Untergrund 36 abgehobenen Rädern des Fahrgestells 10. Für jedes Arbeitsgerät ist durch Wiegen das Minimalgewicht für eine ausreichende Standsicherheit bekannt. Dieser Wert kann im Bordrechner 74 hinterlegt werden. Nach Ausfahren der Stützbeine 28 vor dem Anheben des Arbeitsauslegers 14 kann nunmehr durch Messung der Stützbeinkräfte das aktuelle Maschinengewicht bestimmt und mit dem hinterlegten Sollwert verglichen werden. Bei Unterschreitung des Sollwerts stehen noch Räder des Fahrgestells 10 auf dem Boden auf, so dass die Standsicherheit nicht ausreichend gewährleistet ist. Ein Freischalten des Arbeitsauslegers 14 wird durch die Maschinensteuerung erst dann ermöglicht, wenn das gemessene Maschinengewicht den hinterlegten Sollwert erreicht oder überschreitet.

Um ein Umkippen der Maschine im Betrieb zu verhindern, werden drei Schwellenwerte $S_1$, $S_2$, $S_3$ unterschieden. Bei Erreichen des ersten Schwellenwertes $S_1$ (z.B. $S_1 = 1,25$) wird der Maschinist über ein optisches oder akustisches Signal darüber informiert, dass sich der Arbeitsausleger 14 beim weiteren Verfahren der Standsicherheitsgrenze nähert. Fährt der Maschinist weiter in den standsicherheitsgefährdeten Bereich, werden bei Erreichen eines zweiten Schwellenwertes $S_2$ (z.B. $S_2 = 1,1$) die Antriebe des Arbeitsauslegers 14 abgeschaltet. Durch Lösen einer Sperrfunktion, z. B. an einer Fernbedienung, kann der Arbeitsausleger 14 wieder freigegeben werden. Da ein Weiterfahren des Arbeitsauslegers 14 aus der kritischen Lage durch Betätigen verschiedener Antriebsaggregate des Arbeitsauslegers 14 möglich bleiben muss, ist eine Kopplung der Standsicherheitsüberwachung mit akustischen/optischen Signalen erforderlich. Möglich ist hierbei auch das Einrichten einer Steuerungsfunktion, bei der bestimmte Antriebsaggregate des Arbeitsauslegers 14 entweder gesperrt bleiben oder nur in einer Richtung freigegeben werden. Dazu sind in Abhängigkeit von der Betätigungsart des Arbeitsauslegers 14, beispielsweise von der Faltungsart eines Betonverteilermastes, verschiedene Strategien erforderlich.

Im ungünstigsten Fall fährt der Maschinist jedoch weiter in den standsicherheitsgefährdeten Bereich. Bei Erreichen des der Standsicherheitszahl entsprechenden Grenzwertes $S_3$ (z.B. $S_3 = 1,05$) muss nunmehr der Antrieb des Arbeitsauslegers 14 völlig gesperrt werden. Eine Freigabe ist nur dann möglich, wenn durch zusätzliche Ballastierung des Unterbaus, z. B. durch Anhängen von Fanggewichten an die Stützbeine 28, Volltanken einzelner als Tank ausgebildeter Stützbeine 28, Trimmen des Arbeitsgeräts durch Umpumpen des Tankinhalts von einem zum anderen Stützbein 28, wieder ein dem höheren Schwellenwert $S_2$ entsprechender Gleichgewichtszustand erreicht wird.

Zusammenfassend ist folgendes festzuhalten: Die Erfindung bezieht sich auf ein mobiles Arbeitsgerät, insbesondere eine Autobetonpumpe, mit einem Fahrgestell 10, mit zwei vorderen und zwei rückwärtigen, von einer Fahrstellung in mindestens eine Abstützstellung ausfahrbaren und mit je einem teleskopierbaren Stützbein 28 auf einem Untergrund 36 abstützbaren Stützauslegern 22, 24 mit je einem Messglied 38 zur Bestimmung der in den Stützbeinen 28 angreifenden Stützlast, und mit einer Einrichtung zur Überwachung der Standsicherheit, die eine Auswerteelektronik umfasst, die in vorgegebenen Abtastzyklen mit stützbeinbezogenen Stützlastmesswerten beaufschlagbar sind. Für die Standsicherheitskontrolle ist eine Softwareroutine zur Bestimmung einer Standsicherheitszahl S vorgesehen, die aus dem Quotienten der Gesamtsumme der Stützlastmesswerte aller Stützbeine 28 und einer Teilsumme der Stützlastmesswerte der beiden augenblicklich höchstbelasteten Stützbeine 28 bestimmt wird. Weiter ist eine Alarmroutine zur Auslösung eines Alarmzustands bei Unterschreitung eines vorgegebenen Schwellenwerts $S_1$, $S_2$, $S_3$ für die Standsicherheitszahl S vorgesehen.

## Patentansprüche

1. Arbeitsgerät, insbesondere Autobetonpumpe, mit einem Fahrgestell (10), mit zwei vorderen und zwei rückwärtigen, von einer Fahrstellung in mindestens eine Abstützstellung ausfahrbaren und mit je einem teleskopierbaren Stützbein (28) auf einem Untergrund (36) abstützbaren Stützauslegem (22, 24), mit je einem Messglied (38) zur Bestimmung der Stützlast in den Stützbeinen (28), und mit einer Einrichtung zur Überwachung der Standsicherheit, die eine Auswerteelektronik (68,74) umfasst, die in vorgegebenen Abtastzyklen mit stützbeinbezogenen Stützlastmesswerten beaufschlagbar ist, **gekennzeichnet durch** eine Softwareroutine zur Bestimmung einer Standsicherheitszahl (S) aus dem Quotienten aus der Gesamtsumme der Stützlastmesswerte aller Stützbeine (28) und einer Teilsumme der Stützlastmesswerte der beiden augenblicklich höchstbelasteten Stützbeine (28), sowie eine Alarmroutine zur Auslösung eines Alarmzustands bei Unterschreiten eines vorgegebenen Schwellenwerts für die Standsicherheitszahl.

2. Arbeitsgerät nach Anspruch 1, **dadurch gekennzeichnet, dass** der alarmauslösende Schwellenwert zwischen 1,05 und 1,25 liegt.

3. Arbeitsgerät nach Anspruch 1 oder 2, **dadurch gekennzeichnet, dass** mehrere abgestufte Schwellenwerte ($S_1$, $S_2$, $S_3$) für die Standsicherheit alarmauslösend sind.

4. Arbeitsgerät nach Anspruch 3, **dadurch gekennzeichnet, dass** bei Unterschreiten eines ersten Schwellenwerts ($S_1$) ein akustisches und/oder optisches Signal auslösbar ist.

5. Arbeitsgerät nach Anspruch 4, **dadurch gekennzeichnet, dass** bei Unterschreiten eines zweiten, gegenüber dem ersten niedrigeren Schwellenwerts ($S_2$) eine lösbare Blockierung einer lastverschiebenden Arbeitsbewegung auslösbar ist.

6. Arbeitsgerät nach Anspruch 5, **dadurch gekenn-**

**zeichnet, dass** bei Unterschreiten eines dritten, gegenüber dem zweiten niedrigeren Schwellenwerts ($S_3$) eine unlösbare Blockierung der lastverschiebenden Arbeitsbewegung auslösbar ist.

7. Mobiles Arbeitsgerät, nach einem der Ansprüche 1 bis 6, **dadurch gekennzeichnet, dass** die teleskopierbaren Stützbeine (28) mit einem auslegerfesten Teleskopglied (30) mittels eines Anlenkbolzens (32) an einem Stützbeinkasten (26) angelenkt sind, und dass der Anlenkbolzen (32) als Messglied (38) zur Bestimmung der Stützlast ausgebildet sind.

8. Arbeitsgerät nach Anspruch 7, **gekennzeichnet durch** eine Einrichtung zur Bestimmung der beim Abstützvorgang auftretenden elastischen Biegung des Anlenkbolzens (32) als Maß für die stützbeinbezogene Stützlast.

9. Arbeitsgerät nach Anspruch 8, **dadurch gekennzeichnet, dass** der Anlenkbolzen (32) mindestens einen Dehnmessstreifen (DMS1 bis DMS4) zur Bestimmung der Bolzenbiegung trägt.

10. Arbeitsgerät nach Anspruch 9, **dadurch gekennzeichnet, dass** der Anlenkbolzen (32) mindestens eine achsparallel verlaufende Längsnut (54) zur Aufnahme des Dehnmessstreifens (DMS1 bis DMS4) aufweist.

11. Arbeitsgerät nach Anspruch 10, **dadurch gekennzeichnet, dass** der Anlenkbolzen (32) zwei bezüglich einer Biegeebene (52) einander gegenüberliegende, nach entgegengesetzten Seiten offene Längsnuten (54) zur Aufnahme von jeweils zwei Dehnmessstreifen (DMS1, DMS3 bzw. DMS2, DMS4) aufweist, und dass die Anschlüsse der Dehnmessstreifen in einer als Brükkenschaltung ausgebildeten Messschaltung (44) miteinander verbunden sind.

12. Arbeitsgerät nach Anspruch 10 oder 11, **dadurch gekennzeichnet, dass** der Anlenkbolzen (32) eine einseitig offene Zentralbohrung (55') sowie eine von der mindestens einen Längsnut (54) zur Zentralbohrung verlaufende Querbohrung (55") zur Aufnahme eines Messkabels aufweist.

13. Arbeitsgerät nach einem der Ansprüche 7 bis 12, **gekennzeichnet durch** eine Einrichtung zur Bestimmung der beim Abstützvorgang im Bereich der Lagerstellen (56) des Anlenkbolzens (32) auftretenden elastischen Scherverformung als Maß für die stützbeinbezogene Stützlast aufweist.

14. Arbeitsgerät nach Anspruch 13, **dadurch gekennzeichnet, dass** der Anlenkbolzen (32) im Bereich der Lagerstellen (56) mindestens einen Dehnmessstreifen (DMS1 bis DMS4) zur Bestimmung der Scherverformung trägt.

15. Arbeitgerät nach Anspruch 14, **dadurch gekennzeichnet, dass** der Anlenkbolzen (32) im Bereich der Lagerstellen (56) mindestens einen in Abstützrichtung weisenden Durchbruch (58) aufweist, in dem eine mit dem Bolzenmaterial einstückig verbundene Membran (60) angeordnet ist, die mindestens einen Dehnmessstreifen (DMS1 bis DMS4) trägt.

16. Arbeitsgerät nach Anspruch 15, **dadurch gekennzeichnet, dass** der Anlenkbolzen (32) an beiden Lagerstellen (56) je einen Durchbruch (58) mit Membran (60) aufweist, wobei die Membran in der Scherebene (62) zwischen einem Innen- und einem Außenlager des Stützbeins (28) angeordnet ist.

17. Arbeitsgerät nach Anspruch 16, **dadurch gekennzeichnet, dass** auf den beiden einander abgewandten Breitseitenflächen der Membran (60) jeweils ein parallel zur Scherebene (62) verlaufender Dehnmessstreifen (DMS1 bis DMS4) angeordnet ist, und dass die Dehnmessstreifen in einer vorzugsweise als Brückenschaltung ausgebildeten Messschaltung (44) miteinander verbunden sind.

18. Arbeitsgerät nach einem der Ansprüche 15 bis 17, **dadurch gekennzeichnet, dass** die auf den beiden Breitseitenflächen der Membran (60) angeordneten Dehnmessstreifen schräg zur Abstützrichtung ausgerichtet sind.

19. Arbeitsgerät nach Anspruch 18, **dadurch gekennzeichnet, dass** die auf den beiden Breitseitenflächen der Membran angeordneten Dehnmessstreifen (DMS1 bis DMS4) einander paarweise unter einem Winkel vom 45° bis 90° kreuzen.

20. Arbeitsgerät nach einem der Ansprüche 10 bis 19, **dadurch gekennzeichnet, dass** die Messschaltung (44) über einen als Operationsverstärker ausgebildeten Signalverstärker (46) an eine computergestützte Auswerteelektronik (48, 50) angeschlossen ist.

21. Arbeitsgerät nach einem der Ansprüche 7 bis 20, **dadurch gekennzeichnet, dass** der Anlenkbolzen (32) an einem über den Stützbeinkasten überstehenden Teil ein Gehäuse (76) zur Aufnahme einer Mess- und Auswerteelektronik (44,68) trägt.

**Claims**

1. Working device, in particular an auto concrete pump, comprising a chassis (10) provided with two front and two rear support outriggers (22, 24) which can be extended from a travel position into at least one support position, which can be supported on a base (36) and are respectively provided with a telescopic support leg (28), also provided with a respective measuring element (38) for determining the support load in the support legs (28), and provided with a device for monitoring the stability, said device comprising evaluation electronics (68, 74) which, in predefined sampling cycles, can receive measured support-load values relating to the support legs, **characterized by** a software routine for determining a stability number (S) from the quotient of the overall sum of the measured support-load values of all support legs (28) and a partial sum of the measured support-load values of the two support legs (28) momentarily subjected to highest load, as well as an alarm routine for triggering an alarm state if the stability number goes below a predefined threshold value.

2. Working device according to Claim 1, **characterized in that** the alarm-triggering threshold value is between 1.05 and 1.25.

3. Working device according to either of Claims 1 or 2, **characterized in that** a plurality of graduated threshold values ($S_1$, $S_2$, $S_3$) trigger an alarm for the stability.

4. Working device according to Claim 3, **characterized in that**, upon the non-attainment of a first threshold value ($S_1$), an acoustic and/or optical signal can be triggered.

5. Working device according to Claim 4, **characterized in that**, upon the non-attainment of a second threshold value ($S_2$), which is lower than the first lower threshold value, a releasable blocking of a load-displacing working movement can be triggered.

6. Working device according to Claim 5, **characterized in that**, upon the non-attainment of a third threshold value ($S_3$), which is lower than the second lower threshold value, a non-releasable blocking of the load-displacing working movement can be triggered.

7. Mobile working device, according to any one of Claims 1 to 6, **characterized in that** the telescopic support legs (28), through a telescopic element (30) fixed to the outrigger, are articulated on a support-leg casing (26) by means of a linkage bolt (32), and **in that** the linkage bolt (32) is realized as a measuring element (38) for determining the support load.

8. Working device according to Claim 7, **characterized by** a device for determining, as a measure of the support-leg related support load, the elastic bending of the linkage bolt (32) occurring during the support process.

9. Working device according to Claim 8, **characterized in that** the linkage bolt (32) carries at least one strain gauge (DMS1 to DMS4) for determining the bolt bending.

10. Working device according to Claim 9, **characterized in that** the linkage bolt (32) has at least one longitudinal groove (54), running axially parallel, for receiving the strain gauge (DMS1 to DMS4).

11. Working device according to Claim 10, **characterized in that** the linkage bolt (32) has two longitudinal grooves (54), which are opposite each other relative to a bending plane (52) and are open towards opposite sides, for receiving respectively two strain gauges (DMS1, DMS3 and DMS2, DMS4), and **in that** the terminations of the strain gauges are connected to each other in a measuring circuit (44) realized as bridge circuit.

12. Working device according to either of Claims 10 or 11, **characterized in that** the linkage bolt (32) has a central bore (55') which is open on one side, as well as transverse bore (55"), running from the at least one longitudinal groove (54) to the central bore, for receiving a measurement cable.

13. Working device according to any one of Claims 7 to 12, **characterized by** a device for determining, as a measure of the support-leg related support load, the elastic shear strain occurring during the support process in the area of the bearing locations (56) of the linkage bolt (32).

14. Working device according to Claim 13, **characterized in that** the linkage bolt (32) has, in the area of the bearing locations (56), at least one strain gauge (DMS1 to DMS4) for determining the shear strain.

15. Working device according to Claim 14, **characterized in that** the linkage bolt (32) has, in the area of the bearing locations (56), at least one through-hole (58), directed in the support direction, in which there is arranged a membrane (60) which is joined unitarily to the bolt material and which carries at least one strain gauge (DMS1 to DMS4).

16. Working device according to Claim 15, **characterized in that** the linkage bolt (32) has, at both bearing locations (56), respectively one through-hole (58) with membrane (60), the membrane being arranged in the shear plane (62) between an inner and an outer bearing of the support leg (28).

17. Working device according to Claim 16, **characterized in that** a respective strain gauge (DMS1 to DMS4) running parallel to the shear plane (62) is arranged on the broad side surfaces of the membrane (60) which face away from each other, and **in that** the strain gauges are connected to each other in a measuring circuit (44) preferably realized as a bridge circuit.

18. Working device according to any one of Claims 15 to 17, **characterized in that** the strain gauges arranged on the two broad side surfaces of the membrane (60) are aligned obliquely relative to the support direction.

19. Working device according to Claim 18, **characterized in that** the strain gauges (DMS1 to DMS4) arranged on the two broad side surfaces of the membrane cross each other in pairs at an angle of 45˚ to 90˚.

20. Working device according to any one of Claims 10 to 19, **characterized in that** the measuring circuit (44) is connected to computer-supported evaluation electronics (48, 50) via a signal amplifier (46) realized as an operational amplifier.

21. Working device according to any one of Claims 7 to 20, **characterized in that** the linkage bolt (32) carries a housing (76), projecting over the support-leg casing, for receiving measuring and evaluation electronics (44, 68).

## Revendications

1. Engin de travail mobile, en particulier pompe à béton sur camion, avec un châssis (10), avec deux bras stabilisateurs avant et deux bras stabilisateurs arrière (22, 24) pouvant être déployés d'une position de route dans au moins une position d'appui et pouvant s'appuyer chacun sur un sol (36) par une béquille télescopique (28), avec un élément de mesure (38) respectif pour déterminer la force d'appui dans les béquilles (28), et avec un dispositif pour surveiller la stabilité qui comprend une électronique d'évaluation (68, 74) qui peut être soumise, à des cycles d'échantillonnage prédéfinis, à des valeurs de mesure de la charge d'appui agissant sur les béquilles, **caractérisé par** une routine logicielle pour déterminer un coefficient de stabilité (S) qui est déterminé à partir du quotient de la somme totale des valeurs de mesure de charge d'appui de toutes les béquilles (28) et d'une somme partielle des valeurs de mesure de charge d'appui des deux béquilles (28) momentanément les plus sollicitées, ainsi que par une routine d'alarme pour déclencher un état d'alarme si le coefficient de stabilité devient inférieur à une valeur seuil prédéfinie.

2. Engin de travail selon la revendication 1, **caractérisé en ce que** la valeur seuil déclenchant l'alarme se situe entre 1,05 et 1,25.

3. Engin de travail selon la revendication 1 ou 2, **caractérisé en ce que** plusieurs valeurs seuil échelonnées ($S_1$, $S_2$, $S_3$) déclenchent l'alarme de stabilité.

4. Engin de travail selon la revendication 3, **caractérisé en ce qu'**un signal acoustique et/ou optique peut être déclenché en cas de passage sous une première valeur seuil ($S_1$).

5. Engin de travail selon la revendication 4, **caractérisé en ce qu'**un blocage libérable d'un mouvement de travail déplaçant la charge peut être déclenché en cas de passage sous une deuxième valeur de seuil ($S_2$), inférieure à la première.

6. Engin de travail selon la revendication 5, **caractérisé en ce qu'**un blocage non libérable du mouvement de travail déplaçant la charge peut être déclenché en cas de passage sous une troisième valeur de seuil ($S_3$), inférieure à la deuxième.

7. Engin de travail mobile selon l'une des revendications 1 à 6, **caractérisé en ce que** les béquilles télescopiques (28) sont, par un élément télescopique (30) solidaire du bras, articulées au moyen d'un pivot d'articulation (32) à un caisson de béquille (26), et **en ce que** le pivot d'articulation (32) est conçu comme élément de mesure (38) pour déterminer la charge d'appui.

8. Engin de travail selon la revendication 7, **caractérisé par** un dispositif pour déterminer la flexion élastique du pivot d'articulation (32), survenant lors du processus d'appui, comme mesure de la charge d'appui agissant sur la béquille.

9. Engin de travail selon la revendication 8, **caractérisé en ce que** le pivot d'articulation (32) porte au moins une jauge extensométrique (DMS1 à DMS4) pour déterminer la flexion du pivot.

10. Engin de travail selon la revendication 9, **caractérisé en ce que** le pivot d'articulation (32) présente au moins une rainure longitudinale (54) s'étendant parallèlement à l'axe et destinée à recevoir la jauge extensométrique (DMS1 à DMS4).

11. Engin de travail selon la revendication 10, **caractérisé en ce que** le pivot d'articulation (32) présente deux rainures longitudinales (54) en vis-à-vis par rapport à un plan de flexion (52), ouvertes vers des côtés opposés et destinées à recevoir chacune deux jauges extensométriques (DMS1, DMS3, respectivement DMS2, DMS4), et **en ce que** les connexions des jauges extensométriques sont mutuellement reliées dans un circuit de mesure (44) réalisé sous forme de circuit en pont.

**12.** Engin de travail selon la revendication 10 ou 11, **caractérisé en ce que** le pivot d'articulation (32) présente un perçage central (55') ouvert d'un côté ainsi qu'un perçage transversal (55'') s'étendant de la rainure longitudinale au moins unique (54) au perçage central et destiné à recevoir un câble de mesure.

**13.** Engin de travail selon l'une des revendications 7 à 12, **caractérisé par** un dispositif pour déterminer la déformation de cisaillement élastique, survenant lors du processus d'appui dans la région des paliers (56) du pivot d'articulation (32), comme mesure de la charge d'appui agissant sur la béquille.

**14.** Engin de travail selon la revendication 13, **caractérisé en ce que** le pivot d'articulation (32) présente dans la région des paliers (56) au moins une jauge extensométrique (DMS1 à DMS4) pour déterminer la déformation de cisaillement.

**15.** Engin de travail selon la revendication 14, **caractérisé en ce que** le pivot d'articulation (32) présente dans la région des paliers (56) au moins un percement (58) dirigé dans la direction d'appui et dans lequel est disposée une membrane (60) reliée d'un seul tenant au matériau du pivot, laquelle porte au moins une jauge extensométrique (DMS1 à DMS4).

**16.** Engin de travail selon la revendication 15, **caractérisé en ce que** le pivot d'articulation (32) présente au niveau de chacun des deux paliers (56) un percement (58) doté d'une membrane (60), sachant que la membrane est disposée dans le plan de cisaillement (62) entre un palier intérieur et un palier extérieur de la béquille (28).

**17.** Engin de travail selon la revendication 16, **caractérisé en ce qu'**une jauge extensométrique respective (DMS1 à DMS4) s'étendant parallèlement au plan de cisaillement (62) est disposée sur chacune des deux faces latérales larges mutuellement opposées de la membrane (60), et **en ce que** les jauges extensométriques sont mutuellement reliées dans un circuit de mesure (44) réalisé de préférence sous forme de circuit en pont.

**18.** Engin de travail selon l'une des revendications 15 à 17, **caractérisé en ce que** les jauges extensométriques disposées sur les deux faces latérales larges de la membrane (60) sont orientées obliquement par rapport à la direction d'appui.

**19.** Engin de travail selon la revendication 18, **caracté-**

**risé en ce que** les jauges extensométriques (DMS1 à à DMS4) disposées sur les deux faces latérales larges de la membrane (60) se croisent mutuellement par paires sous un angle de 45° à 90°.

**20.** Engin de travail selon l'une des revendications 10 à 19, **caractérisé en ce que** le circuit de mesure (44) est raccordé à une électronique d'évaluation (48, 50) assistée par ordinateur par l'intermédiaire d'un amplificateur de signaux (46) conçu comme amplificateur opérationnel.

**21.** Engin de travail selon l'une des revendications 7 à 20, **caractérisé en ce que** le pivot d'articulation (32) porte, dans une partie dépassant du caisson de béquille, un boîtier (76) destiné à recevoir une électronique de mesure et d'évaluation (44, 68).

Fig.1

Fig.2

EP 1 772 333 B1

EP 1 772 333 B1

Fig.3a

Fig.3b

EP 1 772 333 B1

Fig.4a

Fig.4b

Fig.5a

Fig.5b

Fig.6a

Fig.6b

$$S = \frac{F1 + F2 + F3 + F4}{\hat{F}_a + \hat{F}_b}$$

Fig.7

EP 1 772 333 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10110176 A
- GB 2187432 A